# EUROPÄISCHE PATENTSCHRIFT

(11) **EP 3 932 819 B1**
(45) Veröffentlichungstag und Bekanntmachung des Hinweises auf die Patenterteilung: **01.03.2023**
(21) Anmeldenummer: 20183715.0
(22) Anmeldetag: 02.07.2020
(51) Int. Cl.: B65D 5/04

(54) **SICHTVERPACKUNG FÜR ENERGIESPEICHERELEMENTE**
TRANSPARENT PACKAGE FOR ENERGY STORAGE ELEMENTS
EMBALLAGE VISIBLE POUR ÉLÉMENTS D'ACCUMULATEUR D'ÉNERGIE

(43) Veröffentlichungstag der Anmeldung: 05.01.2022
(73) Patentinhaber: VARTA Microbattery GmbH, 73479 Ellwangen Jagst (DE); VARTA Consumer Batteries GmbH & Co. KGaA, 73479 Ellwangen Jagst (DE)
(72) Erfinder: Hessel, Otto, 73479 Ellwangen (DE); Köhnlein, Dietmar, 73479 Ellwangen (DE); Regner, Werner, 74579 Fichtenau 2 (DE)
(74) Vertreter: Ostertag & Partner Patentanwälte mbB

(56) Entgegenhaltungen:
- EP-A2- 0 466 328
- US-A1- 2020 115 125

## Beschreibung

Die vorliegende Erfindung betrifft eine Sichtverpackung für Energiespeicherelemente gemäß dem Oberbegriff des Anspruchs 1 sowie einen Zuschnitt zur Herstellung einer derartigen Sichtverpackung.

Bei Energiespeicherelementen handelt es sich oft um Massenartikel, die in Verkaufs- und Vorratspackungen auf den Markt kommen. Die Verpackungen selbst sollten einerseits wirtschaftlich sein und andererseits ein ansprechendes Aussehen aufweisen, um Kaufanreize bieten zu können. Weit verbreitet sind in diesem Zusammenhang Verpackungen vom Blisterkartentyp, die in der Regel von einer Kartonkarte und einer transparenten Blisterfolie aus Kunststoff gebildet werden, wobei die Blisterfolie eine Sicht auf die Energiespeicherelemente erlaubt.

Die europäische Patentanmeldung EP 1 671 896 A1 beschreibt beispielsweise eine Blisterpackung für Energiespeicherelemente. Der Blister bildet eine Mehrzahl von einzelnen Fächern aus. Die rückwärtige Blisterkarte ist beispielsweise aus Karton ausgebildet. Durch Drücken des Anwenders durch den Blister hindurch auf die Energiespeicherelemente wird die rückwärtige Blisterkarte durchbrochen, so dass die Energiespeicherelemente entnommen werden können. Derartige Varianten, bei denen einzelne Energiespeicherelemente durch die Verpackung herausgedrückt werden, werden auch als *single press out technology* bezeichnet. Hierbei wird in der Regel ein einzelnes Energiespeicherelement aus einem Einzelschacht herausgedrückt.

Derartige Verpackungen vom Blisterkartentyp sind jedoch entsorgungstechnisch nicht unproblematisch, da insbesondere die Folienanteile der Verpackungen kaum recycelbar und im Allgemeinen schlecht abbaubar sind. Mit dem Ziel, eine entsorgungsfreundlichere Verkaufsverpackung bereitzustellen, basiert die aus der DE 41 35 468 A1 bekannte Verkaufsverpackung ausschließlich auf zwei Kartonzuschnitten, die ein Trägerteil mit doppelten Seitenwänden zur Aufnahme der Energiespeicherelemente und eine angepasste Hülle mit einem Sichtfenster ausbilden. Eine derartige Verpackung hat den Vorteil, dass die Verpackung vollständig recycelbar und damit sehr umweltfreundlich ist. Zudem können einzelne Energiespeicherelemente entnommen und dann die Packung wieder verschlossen werden, indem der Träger aus der Hülle herausgezogen und wieder hineingeschoben wird. Dieser Vorgang ist für den Anwender allerdings relativ umständlich.

Ein anderer Verpackungstyp ist aus der europäischen Patentanmeldung EP 0 466 328 A2 bekannt. Diese Verpackung, die insbesondere für Energiespeicherelemente in Form zylindrischer Rundzellen vorgesehen ist, wird aus dem Zuschnitt eines Bogens aus einem haltbaren steifen Material, insbesondere aus Karton, gebildet, wobei ein Kanalbereich von V-förmigem Querschnitt ausgebildet wird. In dem Zuschnitt sind Öffnungen vorgesehen, die so positioniert sind, dass diese in entgegengesetzten einstückigen schrägen Schenkeln des Kanalbereichs angeordnet sind, während die Schenkel in V-Anordnung vorliegen. Die zylindrischen Rundzellen sind in diesen Öffnungen des Kanals derart eingelegt, dass sie durch die Schenkel gehalten werden und eine Drehung der zylindrischen Rundzellen verhindert wird. Um eine oder mehrere Rundzellen aus dieser Verpackung entnehmen zu können, muss die Verpackung aufgerissen werden.

Demgegenüber stellt sich die Erfindung die Aufgabe, eine verbesserte Verpackung für Energiespeicherelemente bereitzustellen, die in umweltfreundlicher Weise zu entsorgen ist. Weiterhin soll die Verpackung eine praktische Lösung für die Entnahme und gleichzeitig für die Bevorratung der Energiespeicherelemente bieten. Insbesondere soll mit der Verpackung eine Wiederverschließbarkeit erreicht werden.

Diese Aufgabe wird durch eine Sichtverpackung für Energiespeicherelemente mit den Merkmalen des Anspruchs 1 und durch einen Zuschnitt für eine Sichtverpackung mit den Merkmalen des weiteren unabhängigen Anspruchs gelöst. Bevorzugte Ausgestaltungen dieser Sichtverpackung und des Zuschnitt ergeben sich aus den abhängigen Ansprüchen.

Die erfindungsgemäße Sichtverpackung für Energiespeicherelemente weist die unmittelbar folgenden Merkmale a. bis e. auf:
a. Die Sichtverpackung ist von mindestens einem Zuschnitt aus einem Bogenmaterial unter Ausbildung einer Rückwand und einer Frontwand der Sichtverpackung gebildet.
b. Die Frontwand istvon der Rückwand unter Ausbildung einesAufnahmeschachtes für die Energiespeicherelemente beabstandet.
c. Die Frontwand ist mit mindestens einem Sichtausschnitt versehen.
d. Die Frontwand umfasst mindestens einen Steg.
e. der Steg weist einen zentralen Scheitelbereich auf, der an einem Kontaktbereich der Rückwand fixiert ist, wobei in einer Verschlussposition der Steg und die Rückwand gemeinsam einen K-förmigen Querschnitt bilden und wobei der Steg eine Entnahmeöffnung des Aufnahmeschachts verschließt.

Weiterhin ist die erfindungsgemäße Sichtverpacku ng durch das unmittelbar folgende Merkmal f. gekennzeichnet:
f. die Rückwand weist mindestens eine Perforation auf, die den Kontaktbereich von der übrigen Rückwand abgrenzt und die ein Abtrennen des Kontaktbereichs von der Rückwand erlaubt, so dass der Steg durch einen Klappvorgang in eine Entnahmeposition überführbar ist, in der der Scheitelbereich des Stegs von der Rückwand beabstandet ist und der Steg die Entnahmeöffnung des Aufnahmeschachts freigibt.

Mit den vorgenannten Merkmalen der Sichtverpackung wird eine Verpackung für Energiespeicherelemente bereitgestellt, bei der im Gegensatz zu herkömmlichen Verpackungen ein Durchdrücken der Energiespeicherelemente durch den Karton hindurch oder ein Aufreißen der Verpackung nicht erforderlich ist. Vielmehr wird durch die spezielle Ausgestaltung des oder der Stege, die zusammen mit der Rückwand in der Verschlussposition einen K-förmigen Querschnitt bilden, ein Mechanismus ermöglicht, mit dem die Verpackung zur Entnahme der Energiespeicherelemente geöffnet und anschließend wieder verschlossen werden kann. Hierfür wird bei der erstmaligen Betätigung die Perforation in der Rückwand der Verpackung aufgetrennt. Hierdurch wird der Kontaktbereich des Steges freigesetzt, so dass der Steg angehoben und unter Auflösung der K-förmigen Konfiguration herausgezogen werden kann. Dabei wird der Aufnahmeschacht für die Energiespeicherelemente, der vorher durch den K-förmigen Steg verschlossen war, geöffnet, so dass ein oder mehrere Energiespeicherelemente entnommen werden können. Nach Art eines Schnappverschlusses kann anschließend der Steg wieder in die ursprüngliche, K-förmige Form zurückgeklappt werden, so dass der Aufnahmeschacht wieder verschlossen wird.

Der Steg, der in der Verschlussposition zusammen mit der Rückwand einen K-förmigen Querschnitt bildet und nach Lösen der Perforation auf der Rückwand derart geklappt werden kann, dass der Scheitelbereich des Stegs von der Rückwand beabstandet ist, kann dabei wie ein bistabiles Federelementwirken. Bevorzugt befindetsich der Steg In derVerschlussposition in einem ersten stabilen Zustand, in der Entnahmeposition in einem zweiten stabilen Zustand. Zwischen den beiden stabilen Zuständen steht der Steg bevorzugt unter Spannung.

Bei der erfindungsgemäßen Sichtverpackung können die Energiespeicherelemente entnommen und gegebenenfalls auch wieder in die Sichtverpackung zurückgelegt werden. So kann beispielsweise eine bereits entladene Batterie in umgedrehter Orientierung ("kopfüber") in die Verpackung zurückgelegt und bis zur sachgerechten Entsorgung in der wieder verschlossenen Packung sicher verwahrt werden. Die erfindungsgemäße Sichtverpackung erlaubt damit neben der Umweltfreundlichkeit im Hinblick auf eine spätere Entsorgung der Verpackung eine sinnvolle Möglichkeit zum Organisieren von neuen und gebrauchten Energiespeicherelementen.

Durch den mindestens einen Sichtausschnitt erlaubt die erfindungsgemäße Verpackung zudem eine attraktive und verkaufsfördernde Präsentation der Energiespeicherelemente bei deren Vermarktung.

Es ist bevorzugt, dass der zentrale Scheitelbereich des Stegs, der an dem Kontaktbereich der Rückwand fixiert ist, einen mittleren Bereich des Stegs darstellt, durch den Steg in zwei Schenkel unterteiltwird. In derVerschlussposition, in der der Steg und die Rückwand gemeinsam einen K-förmigen Querschnitt bilden, bilden die Schenkel bevorzugt ein V.

Der zentrale Scheitelbereich kann einen flächigen Bereich bilden, der an dem Kontaktbereich der Rückwand fixiert ist. Beispielsweise kann dieser flächige Bereich etwa eine quadratische Form aufweisen, wobei die Seitenlängen dieses quadratischen Bereichs in etwa der Breite des Steges entsprechen. Dieser flächige Bereich kann beispielsweise etwa 1/3 oder 1/5 oder weniger der gesamten Länge des Steges ausmachen. Für die Fixierung dieses zentralen Scheitelbereichs an der Rückwand eignet sich beispielsweise eine Verklebung oder eine Verklammerung.

In anderen Ausgestaltungen kann der zentrale Scheitelbereich eine rechteckige Form aufweisen, wobei zwei Längsseiten des Scheitelbereichs der Breite des Steges entsprechen und die beiden anderen Längsseiten kürzer sind. In dieser Ausgestaltung kann der Kontaktbereich also wesentlich schmaler als der im vorherigen Abschnitt beschriebene quadratische Kontaktbereich sein. Auch in dieser Ausgestaltung kann die Fixierung des Scheitelbereichs an dem Kontaktbereich durch eine Verklebung realisiert werden. Insbesondere in dieser Ausgestaltung kann auch eine Verklammerung vorgesehen sein, die eine in Längserstreckung des Steges quer dazu ausgerichteten strichförmigen Kontaktbereich ermöglicht.

Die Perforation kann direkt an den Kontaktbereich angrenzen oder auch mit einem gewissen Abstand zu dem eigentlichen Kontaktbereich, in dem der Steg an der Rückwand fixiert ist, angeordnet sein. Durch Herauslösen des Kontaktbereichs mittels der Perforation durch den Anwender wird der Kontaktbereich zusammen mit dem daran fixierten Steg freigesetzt, so dass der Steg in der oben beschriebenen Weise hoch und herunter geklappt werden kann, um den Aufnahmeschacht zu öffnen und wieder zu verschließen.

Für die Stabilität des mittels des Steges erreichbaren Schnappverschlusses ist es im Allgemeinen vorteilhaft, wenn das für die Verpackung verwendete Bogenmaterial eine gewisse Steifigkeit aufweist. In einer besonders bevorzugten Ausgestaltung der erfindungsgemäßen Sichtverpackung zeichnet sich die Sichtverpackung daher durch das unmittelbar folgende zusätzliche Merkmal a. aus:
a. das Bogenmaterial ist Karton.

Insbesondere eignet sich hierfür handelsüblicher Karton, der beispielsweise eine Grammatur zwischen 100 und 1000 g/m² aufweist. Besonders geeignet ist beispielsweise eine Grammatur zwischen 400 und 500 g/m², beispielsweise 400 g/m² oder 425 g/m².

Die Dicke des Kartons kann vorzugsweise zwischen 0,4 und 0,8 mm betragen, insbesondere zwischen 0,5 und 0,6 mm, beispielsweise 0,58 mm.

Die Biegesteifigkeit von geeignetem Kartonmaterial kann in Maschinenrichtung (MD) beispielsweise zwischen 50 und 100 mNm betragen. Die Biegesteifigkeit quer zur Laufrichtung (CD) kann beispielsweise zwischen 10 und 50 mNm betragen.

So eignet sich beispielsweise ein Material mit einer Grammatur von 425 g/m² und einer Biegesteifigkeit von 64,2 mNm (MD) und 32,4 mNm (CD) bei einer Dicke von 0,58 mm. Bei einem anderen geeigneten Beispiel beträgt die Grammatur 400 g/m² bei einer Biegesteifigkeit von 83 mNm (MD) und 26 mNm (CD) und einer Dicke von 0,58 mm. In besonders bevorzugten Ausgestaltungen kann Recyclingmaterial als Kartonmaterial verwendet werden.

In besonders bevorzugter Weise zeichnet sich die erfindungsgemäße Sichtverpackung durch das unmittelbar folgende zusätzliche Merkmal a. aus:
a. der mindestens eine Steg ist ein randseitiger Steg, wobei vorzugsweise zwei randseitige Stege vorgesehen sind.

Durch die randseitige Anordnung des oder der Stege(s) wird ein randseitiger Öffnungsmechanismus für den Aufnahmeschacht in der oben beschriebenen Weise zur Verfügung gestellt. Besonders vorteilhaft ist es dabei, wenn zwei randseitige Stege vorgesehen sind, die in der oben beschriebenen Weise den Aufnahmeschacht öffnen und verschließen können, so dass die Energiespeicherelemente auf beiden Seiten entnommen und/oder zurückgelegt werden können. Je nach Verwendung ist es auch möglich, die Sichtverpackung nur auf einer Seite zu öffnen und gegebenenfalls wieder zu verschließen.

Darüber hinaus kann auch mindestens ein weiterer Steg vorgesehen sein, der sich nicht an den Rändern, sondern innerhalb des Aufnahmeschachtes befindet und somit eine Unterteilung des Aufnahmeschachts in mehrere Fächer ermöglicht. Insbesondere in einer solchen Ausführungsform kann es vorgesehen sein, dass mehrere Sichtausschnitte in der Frontwand der Sichtverpackung vorgesehen sind, die den Blick auf einzelne oder auf in Gruppen angeordnete Energiespeicherelemente freigeben. Der mindestens eine weitere Steg, insbesondere die weiteren Stege, werden dabei zweckmäßigerweise von Bogenabschnitten zwischen den einzelnen Sichtausschnitten gebildet und sind vorzugsweise wie die randseitigen Stege jeweils mit einem zentralen Scheitelbereich an einem Kontaktbereich der Rückwand fixiert und bilden zusammen mit der Rückwand einen K-förmigen Querschnitt. Der mindestens eine weitere Steg, insbesondere die weiteren Stege, unterteilen damit den Aufnahmeschacht in einzelne Kammern zur Aufnahme von jeweils mindestens einem der Energiespeicherelemente.

In einigen Ausführungsformen kann es vorgesehen sein, dass auch bei einem Steg, der den Aufnahmeschacht unterteilt, eine Perforation auf der Rückwand vorgesehen ist, um die Kontaktbereiche dieses Stegs abtrennen zu können. In dieser Ausführungsform kann also auch ein Steg, der den Aufnahmeschacht unterteilt, durch einen Klappvorgang nach Art eines Schnappverschlusses bewegt werden. Diese Ausgestaltung kann beispielsweise besonders vorteilhaft sein, wenn die Sichtverpackung für sechs oder acht oder gegebenenfalls mehr, vorzugsweise paarweise angeordnete Energiespeicherelemente vorgesehen ist. Es kann jedoch auch vorgesehen sein, dass Stegen, die den Aufnahmeschacht unterteilen, keine Perforation zugeordnet ist, so dass diese Stege nicht zerstörungsfrei bewegt werden können.

Die Perforation, mit der der Kontaktbereich, an dem der Scheitelbereich des Stegs befestigt ist, von der übrigen Rückwand der Sichtverpackung abtrennbar ist, kann in unterschiedlicher Weise ausgestaltet sein. Insbesondere kann mittels der Perforation ein etwa rechteckiger Bereich von der Rückwand abgetrennt werden. In Bezug auf die Ausgestaltung der Perforation ist es dabei wichtig, dass derdurch die Perforation abtrennbare Bereich derjenige Bereich ist, an dem der Scheitelbereich des Stegs fixiert ist.

Wenn im Zuge dieser Anmeldung von einer Perforation gesprochen wird, ist hiermit im Allgemeinen eine linienförmige Schwächung der Rückwand gemeint. Entlang dieser Schwächungslinie ist die Rückwand empfindlicher gegenüber mechanischen Belastungen, insbesondere gegenüber Druckbelastungen senkrecht zur Fläche der Rückwand und Zugbelastungen parallel zur Rückwand. Die Perforation bildet bevorzugt eine Solltrennstelle in Form eines Rahmens, der den Kontaktbereich abgrenzt.

Beispielsweise kann die Perforation durch linienartige oder punktartige Ausstanzungen oder Durchbrechungen oder Kombinationen von derartigen Linien und Punkten gebildet sein. Die Perforation soll dem Anwender ein leichtes Abtrennen des abtrennbaren Bereiches ermöglichen und versehentliche Beschädigungen anderer Bereiche der Rückwand vermeiden.

Es können verschiedene Geometrien für die Form der Perforation, also für den durch die Perforation gebildeten Rahmen, gewählt werden, beispielsweise neben rechteckigen Formen auch runde oder abgewinkelte Formen.

Wenn sich die Perforation(en) in randseitigen Bereichen der Rückwand befindet/befinden, kann der Bereich mit der Perforation an einer Seite von dem Rand der Rückwand begrenzt sein. Die übrigen drei Seiten im Beispiel eines etwa rechteckförmigen perforierten Abschnitts werden durch die eigentlichen Perforationen gebildet.

In einer besonders bevorzugten Ausgestaltung ist die erfindungsgemäße Sichtverpackung durch das unmittelbar folgende zusätzliche Merkmal a. gekennzeichnet:
a. der Perforation ist mindestens ein an die Perforation angrenzender Ausschnitt zugeordnet, insbesondere ein halbkreisförmiger Ausschnitt oder mindestens ein randseitiger Ausschnitt.

Der Ausschnitt kann insbesondere so ausgebildet sein, dass er einen Eingriff mit einem Finger oder einem Fingernagel erlaubt, so dass hierdurch die Perforation in besonders einfacher Weise manuell gelöst werden kann. Durch diese Maßnahme wird dieAnwenderfreundlichkeit der erfindungsgemä-ßen Sichtverpackung noch weiter gesteigert. Wenn die Perforation beispielsweise für eine Freisetzung eines randseitigen Steges vorgesehen ist, kann es bei dem angrenzenden Ausschnitt vorgesehen, dass dieser Ausschnitt dem jeweiligen Rand der Verpackung gegenüberliegend am Rande der Perforation liegt.

Der Ausschnitt befindet sich also bevorzugt dem Rand der Verpackung gegenüberliegend, um so einen bequemen Eingriff zum Lösen der Perforation für den Anwender zu ermöglichen. In anderen Ausgestaltungen kann die Perforation durch randseitige kleine Ausschnitte, beispielsweise zwei Ausschnitte, erweitert werden, die ebenfalls ein Eingreifen und Lösen der Perforation von der Seite für den Anwender weiter erleichtern.

In einer besonders bevorzugten Ausgestaltung der erfindungsgemäßen Sichtverpackung zeichnet sich die Sichtverpackung durch das unmittelbar folgende zusätzliche Merkmal a aus:
a. die Sichtverpackung ist aus genau einem Zuschnitt durch Falzung an parallelen Linien und Verklebung gebildet.

Die Herstellung der Sichtverpackung aus genau einem Zuschnitt ist produktionstechnisch sehr vorteilhaft, da hierdurch die Produktion vereinfacht wird. In bevorzugten Ausführungsformen muss hierbei lediglich ein Teil an entsprechenden parallelen Linien gefalzt und anschließend verklebt werden.

Es ist jedoch auch durchaus möglich, die beschriebene erfindungsgemäße Sichtverpackung aus beispielsweise zwei Zuschnitten herzustellen. In diesen Fällen sind im Allgemeinen weitere Klebe- oder alternative Fixierschritte erforderlich, um die Sichtverpackung mit der Rückwand und der Frontwand und dem damit ausgebildeten Aufnahmeschacht herzustellen.

In besonders bevorzugter Weise zeichnet sich die erfindungsgemäße Sichtverpackung durch das unmittelbar folgende zusätzliche Merkmal a. aus:
a. die Sichtverpackung ist zur Verpackung von Energiespeicherelemente in Form von zylindrischen Rundzellen vorgesehen.

Zylindrische Rundzellen sind als Energiespeicherelemente sehr weit verbreitet, so dass die sehr wirtschaftliche Herstellbarkeit der erfindungsgemäßen Sichtverpackung und deren umweltfreundliche Entsorgungsmöglichkeiten besondere Vorteile für diese Massenprodukte bieten. Grundsätzlich eignet sich die erfindungsgemäße Sichtverpackung auch für andere Formen von Energiespeicherelementen, beispielsweise für prismatisch geformte Energiespeicherelemente.

Die erfindungsgemäße Sichtverpackung kann durch entsprechende Anpassung der Dimensionen an verschiedene Formen und Größen der zu verpackenden Energiespeicherelemente angepasst werden. Besonders eignet sich die erfindungsgemäße Sichtverpackung zur Aufnahme von zylindrischen Rundzellen in den weit verbreiteten Baugrößen AA oder AAA. Energiespeicherelemente mit dem Standardformat AA weisen einen Durchmesser von 13,5 mm bis 14,5 mm und eine Höhe von 49,2 mm bis 50,5 mm auf. Energiespeicherelemente mit dem Standardformat AAA weisen einen Durchmesser von 9,5 bis 10,5 mm und einer Höhe von 43,3 bis 44,5 mm auf. Die erfindungsgemäße Sichtverpackung ist jedoch nicht auf die Verpackung von derartigen zylindrischen Rundzellen beschränkt.

In einer besonders vorteilhaften Ausführungsform zeichnet sich die erfindungsgemäße Sichtverpackung durch das unmittelbar folgende zusätzliche Merkmal a aus:
a. die Sichtverpackung ist zur paarweisen Anordnung der Energiespeicherelemente vorgesehen, wobei jeweils ein Sichtausschnitt einem Paar der Energiespeicherelemente zugeordnet ist.

Diese Ausführungsform ist besonders vorteilhaft, da für verschiedene Anwendungen oftmals Paare von Energiespeicherelementen verwendet werden. Es werden also oftmals gleichzeitig zwei Energiespeicherelemente oder gegebenenfalls auch vier Energiespeicherelemente benötigt. Daher ist es von besonderem Vorteil, wenn aus der erfindungsgemäßen Sichtverpackung gleichzeitig zwei bzw. ein Paar Energiespeicherelemente entnommen oder gegebenenfalls wieder zurückgelegt werden kann. In dieser Ausgestaltung ist es vorgesehen, dass jeweils ein Sichtausschnitt einem Paar der Energiespeicherelemente zugeordnet ist.

Bei einer Verpackung mit mehr als zwei Energiespeicherelementen, also beispielsweise mit vier Energiespeicherelementen, ist es besonders vorteilhaft, wenn die Paare der Energiespeicherelemente durch weitere Stege im Inneren des Aufnahmeschachtes voneinander getrennt sind. Wie weiter oben bereits erwähnt, können diese inneren Stege, die ebenfalls einen K-förmigen Querschnitt zusammen mit der Rückwand bilden, ebenso wie der randseitige Steg oder die randseitigen Stege mit einer Perforation ausgestattet sein, in bevorzugten Ausführungsformen gleichfalls nach Art eines Schnappverschlusses betätigt werden.

Es kann jedoch auch vorgesehen sein, dass diese inneren Stege in Folge eines Verzichts auf entsprechende Perforationen nicht nach Art eines Schnappverschlusses betätigbar sind. Diese Ausgestaltung kann beispielsweise bevorzugt sein, wenn in der erfindungsgemäßen Sichtverpackung zwei Paare von Energiespeicherelementen angeordnet sind. In diesem Fall können die Paare jeweils über die randseitig klappbare Stege entnommen werden. Der Steg, der sich in der Mitte des Aufnahmeschachtes zwischen beiden Paaren der Energiespeicherelemente befindet, ist bevorzugt nicht klappbar ausgestaltet, da die Entnahme der Energiespeicherelemente über die Ränder erfolgt.

In besonders bevorzugter Weise ist die erfindungsgemäße Sichtverpackung zur Anordnung von zwei oder von vier Energiespeicherelementen vorgesehen. Es ist jedoch auch durchaus möglich, dass die Sichtverpackung für die Verpackung von mehr als vier Energiespeicherelementen vorgesehen ist. Weiterhin ist es natürlich auch möglich, eine ungerade Anzahl von Energiespeicherelementen mit der erfindungsgemäßen Sichtverpackung zu verpacken.

In bevorzugter Weise ist die erfindungsgemäße Sichtverpackung durch das unmittelbar folgende zusätzliche Merkmal a. gekennzeichnet:
a. die Sichtverpackung enthält mindestens ein Energiespeicherelement, vorzugsweise mindestens ein Paar von Energiespeicherelementen, besonders bevorzugt ein oder zwei Paar(e) von Energiespeicherelementen.

Bei dem oder den Energiespeicherelement(en), die/das in der Sichtverpackung enthalten sind/ist, handelt es sich mit besonderem Vorteil um die erwähnten zylindrische Rundzellen, insbesondere im Format AA oder AAA.

Besonders bevorzugt in diesem Zusammenhang sind primäre Alkali-Mangan-Zellen aber grundsätzlich können auch sekundäre Zellen, beispielsweise Lithium-Ionen-Zellen oder Nickel-Metallhydrid-Zellen in der Sichtverpackung enthalten sein. Solche Energiespeicherelemente werden für sehr viele Anwendungen, z.B. Haushaltsanwendungen oder andere Anwendungen des täglichen Bedarfs, benötigt. Die erfindungsgemäße Sichtverpackung eignet sich hervorragend zur Präsentation und Verpackung dieser Massenartikel.

Die Erfindung umfasst darüber hinaus entsprechende Zuschnitte aus einem Bogenmaterial, vorzugsweise Kartonzuschnitte, aus denen die beschriebene Sichtverpackung herstellbar ist. Bezüglich weiterer Einzelheiten dieser Zuschnitte wird auf die obigen Ausführungen und auf die nachfolgende Beschreibung von Ausführungsbeispielen in Verbindung mit den Zeichnungen verwiesen.

Weitere Merkmale und Vorteile der Erfindung ergeben sich aus der nachfolgenden Beschreibung von Ausführungsbeispielen in Verbindung mit den Zeichnungen. Hierbei können die einzelnen Merkmale jeweils für sich oder in Kombination miteinander verwirklicht sein.

In den Figuren zeigen:
- Fig. 1: Eine Schrägansicht einer ersten Ausführungsform einer erfindungsgemäßen Sichtverpackung mit vier eingelegten Energiespeicherelementen,
- Fig. 2: eine Schrägansicht einer zweiten Ausführungsform einer erfindungsgemäßen Sichtverpackung mit vier eingelegten Energiespeicherelementen,
- Fig. 3: eine beispielhafte Ausgestaltung einer Perforation,
- Fig. 4: ein weiteres Beispiel einer Perforation,
- Fig. 5: ein weiteres Beispiel einer Perforation,
- Fig. 6: ein weiteres Beispiel einer Perforation,
- Fig. 7: vier beispielhafte Ausgestaltungen der Rückwand bzw. Rückseite einer erfindungsgemäßen Sichtverpackung mit je zwei randständigen Perforationen,
- Fig. 8: ein beispielhafter Zuschnitt zur Herstellung einer erfindungsgemäßen Sichtverpackung und
- Fig. 9: ein weiterer beispielhafter Zuschnitt zur Herstellung einer erfindungsgemäßen Sichtverpackung.

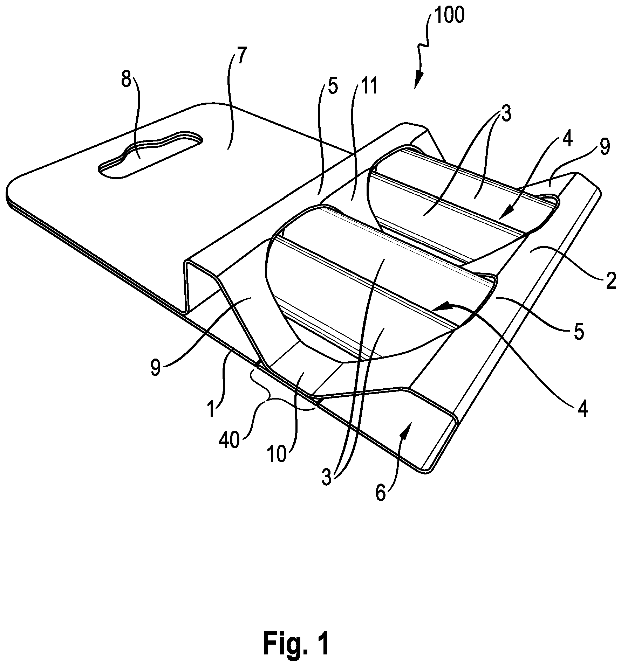

**Fig.** 1 zeigt in schräger Aufsicht eine bevorzugte Ausführungsform einer erfindungsgemäßen Sichtverpackung 100. Die Sichtverpackung 100 ist aus einem Zuschnitt aus einem Bogenmaterial, insbesondere aus einem Kartonzuschnitt, durch Falzungen und Verklebungen gebildet. Die Sichtverpackung 100 umfasst eine Rückwand 1 und eine Frontwand 2, die gemeinsam einen Aufnahmeschacht 6 bilden, in dem sich die in Paaren angeordneten Energiespeicherelemente 3, in diesem Beispiel zwei Paare, befinden. Bei den Energiespeicherelementen 3 handelt es sich um zylindrische Rundzellen.

Die Frontwand weist zwei Sichtausschnitte 4 auf, durch die die Energiespeicherelemente 3 für den Betrachter zum größten Teil sichtbar sind. Teile der Frontwand bilden Begrenzungsabschnitte 5 für die Energiespeicherelemente 3, so dass die Energiespeicherelemente 3 quer in dem Aufnahmeschacht 6 liegen. Der Aufnahmeschacht 6 ist so ausgestaltet, dass die Energiespeicherelemente 3 mit paralleler Ausrichtung ihrer Längsachsen in dem Aufnahmeschacht6 liegen. Die Breite des Aufnahmeschachtes 6 entspricht dabei im Wesentlichen der Länge der einzelnen Energiespeicherelemente 3. Allgemein hängt die Länge des Aufnahmeschachtes 6 davon ab, wie viele Energiespeicherelemente 3 (in diesem Beispiel vier) in der Sichtverpackung 100 Platz finden sollen.

Oberhalb des Aufnahmeschachtes 6 befindet sich eine freie Fläche 7 der Sichtverpackung 100. Diese Fläche 7 kann für Beschriftungen und andere Darstellungen insbesondere zu Verkaufs- und Präsentationszwecken genutzt werden. Weiterhin weist die Sichtverpackung 100 im oberen Bereich eine Ausstanzung bzw. einen Ausschnitt 8 auf, mit dem die Sichtverpackung 100 an geeigneten Ständern für den Verkauf aufgehängt werden kann.

In den beiden randseitigen Bereichen der Sichtverpackung im Bereich des Aufnahmeschachts 6 ist jeweils ein Steg 9 angeordnet, der zusammen mit der Rückwand 1 einen K-förmigen Querschnitt in der hier gezeigten Verschlussposition ausbildet. Der zentrale Scheitelbereich 10 des Stegs 9 ist an einem Kontaktbereich der Rückwand 1 fixiert und insbesondere verklebt. Der Scheitelbereich 10 unterteilt den Steg 9 gewissermaßen in zwei Schenkel, so dass der Scheitelbereich 10 und die Schenkel des Steges etwa einen V-förmigen Querschnitt aufweist. Durch diese Anordnungdes Stegs 9 wird der Aufnahmeschacht 6 verschlossen und ein Herausrutschen der Energiespeicherelemente 3 vermieden, so dass die Energiespeicherelemente 3 sicher in der Sichtverpackung 100 verwahrt sind.

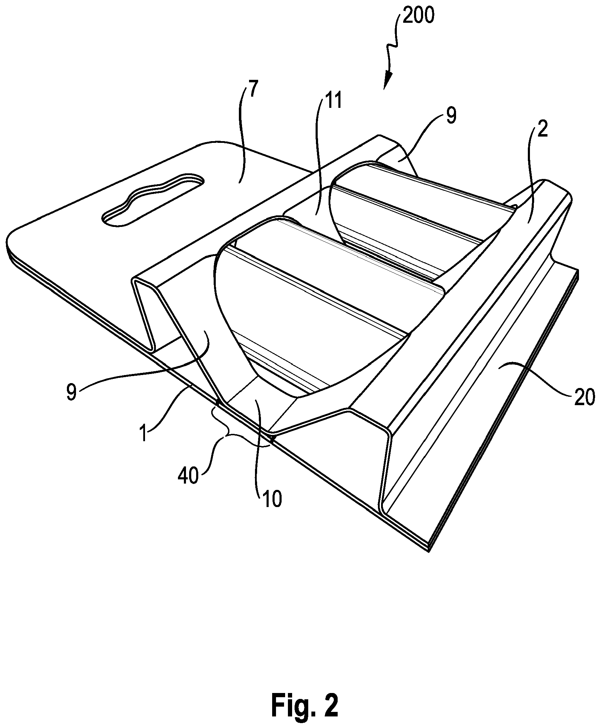

Die Sichtverpackung 100 ist in dieser Ausführungsform aus einem einteiligen Kartonzuschnitt gebildet. In anderen Ausgestaltungen kann für die Herstellung einer vergleichbaren Sichtverpackung ein zweiteiliger Zuschnitt verwendet werden, wie es anhand von **Fig.** 2 illustriert ist.

Die in Fig. 2 gezeigte Ausführungsform der Sichtverpackung 200 weist in vergleichbarer Weise wie die Sichtverpackung 100 aus der Fig. 1 eine Rückwand 1 und eine Frontwand 2 auf und ist auch in Bezug auf die übrigen Elemente in vergleichbarer Weise wie die Ausführungsform 100 ausgebildet. Im Unterschied zu der Ausführungsform 100 wird in der Ausführungsform 200 die Frontwand 2 von einem separaten Zuschnitt gebildet, der im unteren Bereich 20 und im Bereich der oberen Fläche 7 auf den entsprechenden Zuschnitt für die Rückwand 1 geklebt wird. Im Übrigen entspricht die Ausgestaltung der in Fig. 2 gezeigten Ausführungsform 200 der Sichtverpackung der Ausführungsform 100 und es wird bezüglich der entsprechenden Merkmale auf die Beschreibung zu Fig. 1 verwiesen.

Ein zentraler Aspekt der Erfindung ist, dass der Scheitelbereich 10 zusammen mit dem Kontaktbereich 40 der Rückwand 1, an dem der Scheitelbereich fixiert ist, mittels einer Perforation von der Rückwand 1 abtrennbar ist. Dadurch ist der Steg 9 dann nur noch an zwei Punkten fest verankert, nämlich an seinen beiden Enden im Bereich der Begrenzungsabschnitte 5 des Aufnahmeschachtes 6, so dass der Steg 9 aus der Verschlussposition herausgehoben und nach oben geklappt werden kann. Dadurch wird der Aufnahmeschacht 6 in eine geöffnete Position gebracht, so dass ein oder mehrere Energiespeicherelemente 3, beispielsweise ein Paar der Energiespeicherelemente, entnommen werden kann/können. Anschließend kann der Steg 9 wieder in die K-förmige Verschlussposition nach Art eines Schnappverschlusses gebracht werden, um den Aufnahmeschacht 6 zu schließen. Vorzugsweise sind beiden randseitigen Stegen solche Perforationen zugeordnet, so dass der Aufnahmeschacht 6 auf beiden Seiten geöffnet und wieder verschlossen werden kann.

Etwa in der Mitte des Aufnahmeschachts 6 in den Ausführungsformen 100 und 200 der Sichtverpackung befindet sich ein weiterer Steg 11, der vergleichbar mit den randseitigen Stegen 9 zusammen mit der Rückwand 1 einen K-förmigen Querschnitt bildet. Hierbei ist es möglich, dass dem Scheitelbereich auch des Steges 11 eine Perforation zugeordnet ist, so dass der Scheitelbereich des Steges 11 von der übrigen Rückwand gelöst und damit der Steg 11 nach Art eines Schnappverschlusses betätigt werden kann. In anderen Ausgestaltungen kann es jedoch auch vorgesehen sein, dass dem Steg 11 keine Perforation zugeordnet ist, so dass der Steg 11 gewissermaßen eine dauerhafte Unterteilung des Aufnahmeschachtes 6 bildet. Insbesondere in Ausführungsformen, in denen die Sichtverpackung mehr als zwei Fächer, die jeweils durch Stege 11 voneinander getrennt sind, aufweist, kann es sinnvoll sein, auch die Stege 11, die den Aufnahmeschacht 6 weiter unterteilen, mit einer Perforation zur Abtrennung des jeweiligen Scheitelbereichs zu versehen, um auch diese Stege 11 öffnen und schließen zu können.

Der besondere Vorteil der erfindungsgemäßen Sichtverpackung liegt also darin, dass die Sichtverpackung nach dem Entnehmen oder dem Zurücklegen von einem oder mehreren Energiespeicherelementen wieder verschlossen werden kann. Sowohl in der Verschlussposition als auch in der Entnahmeposition steht kein Verpackungsmaterial ab und es kommt auch nicht dazu, dass Verpackungsmaterial unbeabsichtigt abfallen könnte. In besonders bevorzugter Weise ist die Sichtverpackung zur paarweisen Entnahme von Energiespeicherelementen wie in den hier gezeigten Beispielen eingerichtet. Die erfindungsgemäße Sichtverpackung eignet sich dabei insbesondere für die Verpackung von zwei oder von vier Energiespeicherelementen, beispielsweise in den Größen AA oder AAA.

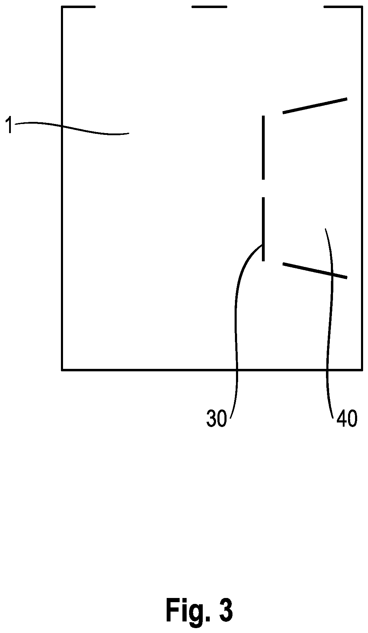

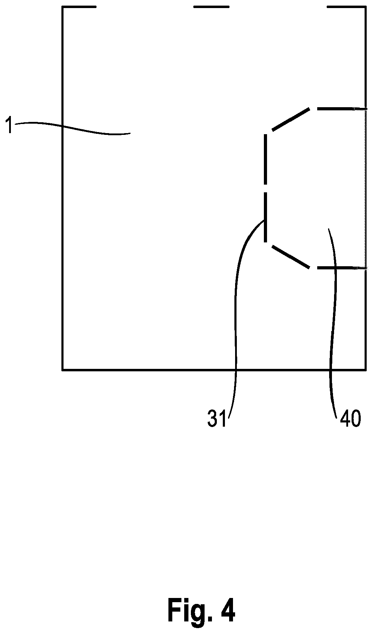

Die **Fig. 3 bis 6** zeigen verschiedene Beispiele für die Perforationen, mit denen der jeweilige Kontaktbereich 40, an dem der zentrale Scheitelbereich 10 des Steges 9 fixiert ist, von der übrigen Rückwand 1 gelöst werden kann. In den hier gezeigten Darstellungen ist jeweils die Rückwand 1 von der Rückseite der Sichtverpackung her gezeigt. Die gezeigten Perforationen sind randseitigen Stegen zugeordnet. Die Perforationen 30, 31, 32, 33 grenzen dabei den jeweiligen Kontaktbereich 40 von der übrigen Rückwand 1 ab. Die in diesen Darstellungen gezeigte jeweils rechte Seite des mittels der Perforation 30, 31, 32 oder 33 abtrennbaren Kontaktbereiches 40 wird von der offenen Kante bzw. von dem Rand der Sichtverpackung gebildet. Die übrigen Seiten, insbesondere die verbleibenden drei Seiten des etwa rechteckförmigen Kontaktbereichs 40 werden von den in diesen Beispielen strichförmigen Perforationen 30, 31, 32, 33 gebildet. Hierbei sind verschiedene Geometrien möglich, beispielsweise eine Geometrie mit abgeschrägten Ecken wie in den Ausführungsbeispielen 31 und 33.

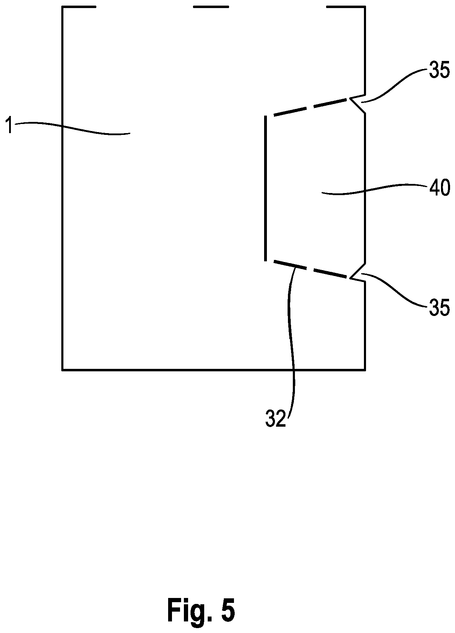

In der Fig. 5 ist eine besonders bevorzugte Ausgestaltung der Perforation 32 gezeigt, wobei hier in den randseitigen Bereichen der Perforation 32 zwei dreieckförmige Ausschnitte 35 vorgesehen sind, die den manuellen Eingriff für einen Anwender erleichtern.

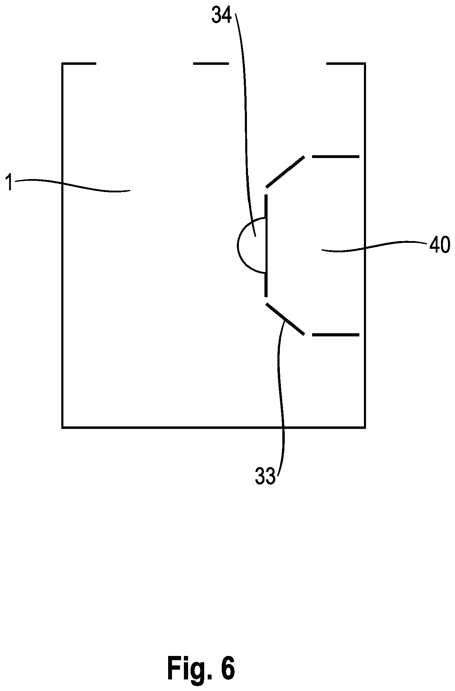

Fig. 6 zeigt dabei eine weitere besonders bevorzugte Ausgestaltung der Perforation 33, wobei in dieser Ausgestaltung ein an die Perforation 33 angrenzender halbkreisförmiger Ausschnitt 34 vorgesehen ist, mit dem das Ablösen bzw. das Auftrennen der Perforation 33 für den Anwender weiter erleichtert wird.

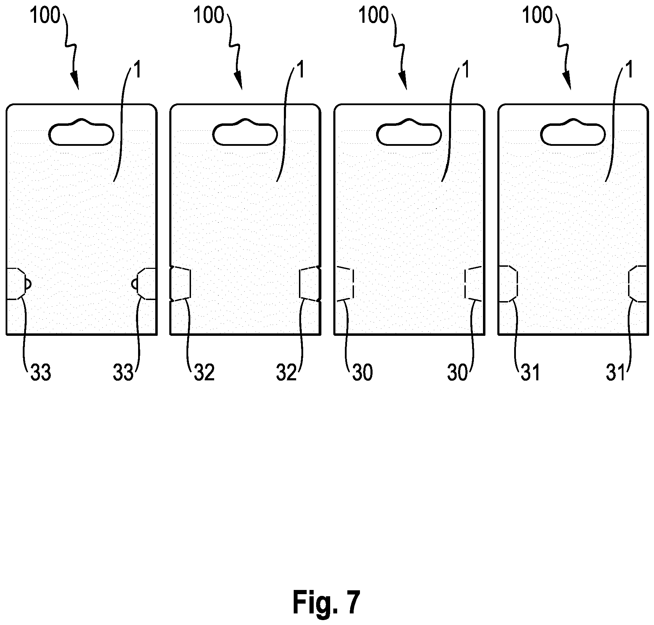

**Fig. 7** zeigt jeweils die komplette rückwärtige Ansicht auf die Rückwände 1 der Sichtverpackungen 100 zur Veranschaulichung der Anordnung der jeweiligen Perforationen 30, 31, 32 bzw. 33. Diejeweiligen Perforationen 30, 31, 32 und 33 befinden sich jeweils am Rand der Rückwände 1 und sind dabei den hier nicht weiter sichtbaren randseitigen Stegen der Sichtverpackungen 100 zugeordnet. Mithilfe dieser Perforationen kann ein Anwender in einfacher Weise die randseitigen Stege der Sichtverpackungen 100 in der beschriebenen Weise öffnen und wieder schließen, um Energiespeicherelemente zu entnehmen oder gegebenenfalls auch wieder zurücklegen zu können.

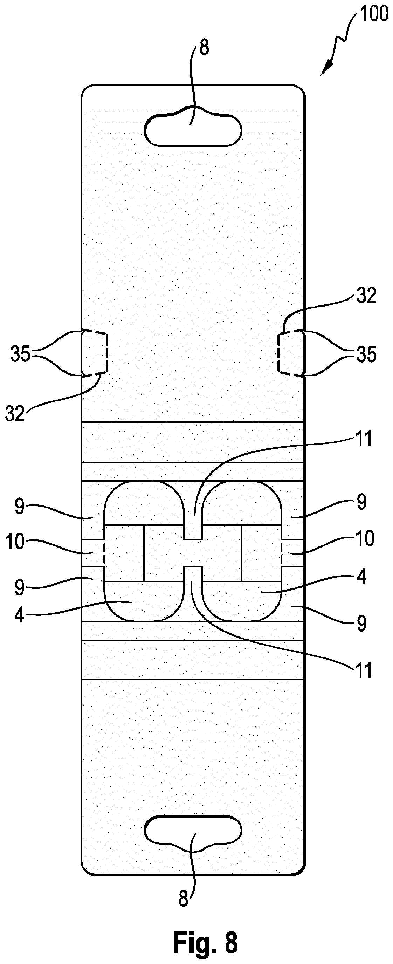

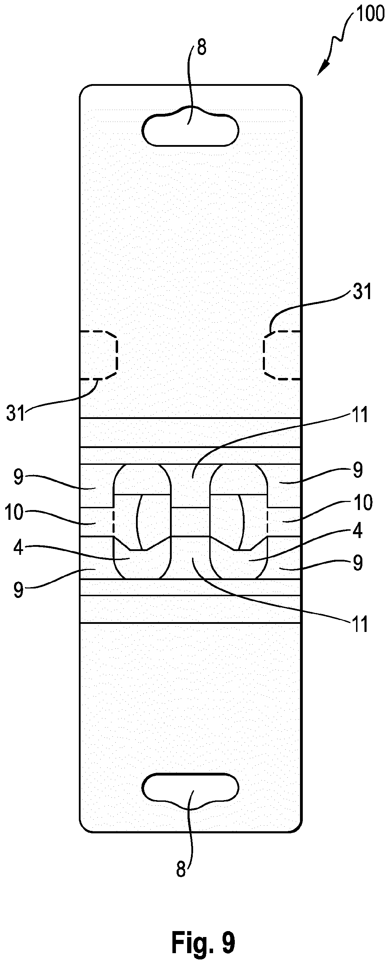

Die Fig. 8 und 9 illustrieren beispielhafte Schnittmuster für einteilige Zuschnitte aus einem Bogenmaterial, beispielsweise aus Karton, die durch Falzungen an den dargestellten Linien und entsprechende Verklebungen zur Herstellung einer erfindungsgemäßen Sichtverpackung 100 vorgesehen sind. Als Bogenmaterial eignet sich beispielsweise ein Material mit einer Grammatur von 425 g/m² und einer Biegesteifigkeit von 64,2 mNm (MD) und 32,4 mNm (CD) bei einer Dicke von 0,58 mm (GD 425 g/m²). Bei einem anderen geeigneten Beispiel beträgt die Grammatur 400 g/m² bei einer Biegesteifigkeit von 83,0 mNm (MD) und 26,0 mNm (CD) und einer Dicke von 0,58 mm (GT4 Kraftkarton 400 g/m²).

Die **Fig. 8** zeigt einen einteiligen Zuschnitt für eine Sichtverpackung 100, bei der randseitige Perforationen 32 mit den bereits erläuterten randseitigen Ausschnitten 35 vorgesehen ist. Dieser Zuschnitt kann beispielsweise für eine Verpackung für vier zylindrische Rundzellen in dem Format AA, die als zwei Paare angeordnet sind, verwendet werden.

Die **Fig. 9** zeigt einen einteiligen Zuschnitt für eine Sichtverpackung 100, bei der randseitige Perforationen 31 mit abgewinkelten Ecken vorgesehen sind. Die dreidimensionale Ausgestaltung der Sichtverpackung 100 wird durch Faltung an den parallelen Linien und entsprechende Verklebungen erreicht. Auf diese Weise wird ein Aufnahmeschacht 6 für die Energiespeicherelemente, insbesondere für zylindrische Rundzellen, hergestellt, wobei die Energiespeicherelemente dann im Bereich der Sichtausschnitte 4 liegen. Dieser Zuschnitt kann beispielsweise für eine Verpackung für vier zylindrische Rundzellen in dem Format AAA, die als zwei Paare angeordnet sind, verwendet werden. Im gefalteten und geklebten Zustand liegen die Ausschnitte 8 jeweils aufeinander und bilden die Aufhängeöffnung für die Sichtverpackung 100. Je nach Größe und Anzahl derzu verpackenden Energiespeicherelemente können die Abmessungen der Zuschnitte entsprechend angepasst werden.

## Patentansprüche

1. Sichtverpackung (100; 200) für Energiespeicherelemente (3) mit den folgenden Merkmalen:
a. Die Sichtverpackung (100; 200) ist aus mindestens einem Zuschnitt aus einem Bogenmaterial unter Ausbildung einer Rückwand (1) und einer Frontwand (2) der Sichtverpackung gebildet,
b. die Frontwand (2) ist von der Rückwand (1) unter Ausbildung eines Aufnahmeschachtes (6) für die Energiespeicherelemente (3) beabstandet,
c. die Frontwand (2) ist mit mindestens einem Sichtausschnitt (4) versehen,
d. die Frontwand (2) umfasst mindestens einen Steg (9), und
e. der Steg (9) weist einen zentralen Scheitelbereich (10) auf, der an einem Kontaktbereich (40) der Rückwand (1) fixiert ist, wobei in einer Verschlussposition der Steg (9) und die Rückwand (1) gemeinsam einen K-förmigen Querschnitt bilden und wobei der Steg (9) eine Entnahmeöffnung des Aufnahmeschachts (6) verschließt,
**dadurch gekennzeichnet, dass**
f. die Rückwand (1) mindestens eine Perforation (30; 31; 32; 33) aufweist, die den Kontaktbereich (40) von der übrigen Rückwand (1) abgrenzt und die ein Abtrennen des Kontaktbereichs (40) von der Rückwand (1) erlaubt, so dass der Steg (9) durch einen Klappvorgang in eine Entnahmeposition überführbar ist, in der derScheitelbereich (10) des Stegs (9) von der Rückwand (1) beabstandet ist und der Steg (9) die Entnahmeöffnung des Aufnahmeschachts (6) freigibt.

2. Sichtverpackung nach Anspruch 1 mit dem folgenden zusätzlichen Merkmal:
a. Das Bogenmaterial ist Karton.

3. Sichtverpackung nach Anspruch 1 oder Anspruch 2 mit dem folgenden zusätzlichen Merkmal:
a. Der mindestens eine Steg (9) ist ein randseitiger Steg, wobei vorzugsweise zwei randseitige Stege (9) vorgesehen sind.

4. Sichtverpackung nach einem der vorhergehenden Ansprüche mit dem folgenden zusätzlichen Merkmal:
a. der Perforation (30; 31; 32; 33) ist mindestens ein an die Perforation angrenzender Ausschnitt (34; 35) zugeordnet, insbesondere ein halbkreisförmiger Ausschnitt (34) oder mindestens ein randseitiger Ausschnitt (35).

5. Sichtverpackung nach einem der vorhergehenden Ansprüche mit dem folgenden zusätzlichen Merkmal:
a. die Sichtverpackung (100) ist aus genau einem Zuschnitt gebildet, insbesondere durch Falzung an parallelen Linien und Verklebung.

6. Sichtverpackung nach einem der vorhergehenden Ansprüche mit dem folgenden zusätzlichen Merkmal:
a. die Sichtverpackung (100; 200) ist zur Verpackung von Energiespeicherelementen (3) in Form von zylindrischen Rundzellen ausgebildet.

7. Sichtverpackung nach einem der vorhergehenden Ansprüche mit dem folgenden zusätzlichen Merkmal:
a. die Sichtverpackung (100; 200) ist zur paarweisen Anordnung der Energiespeicherelemente (3) ausgebildet, wobei jeweils ein Sichtausschnitt (4) einem Paarder Energiespeicherelemente (3) zugeordnet ist.

8. Sichtverpackung nach einem der vorhergehenden Ansprüche mit dem folgenden zusätzlichen Merkmal:
a. die Sichtverpackung ist zur Anordnung von zwei oder von vier Energiespeicherelementen (3) ausgebildet.

9. Sichtverpackung nach einem der vorhergehenden Ansprüche mit dem folgenden zusätzlichen Merkmal:
a. die Sichtverpackung enthält mindestens ein Energiespeicherelement (3), vorzugsweise mindestens ein Paar von Energiespeicherelementen, besonders bevorzugt ein oder zwei Paar(e) von Energiespeicherelementen.

10. Zuschnitt aus einem Bogenmaterial zur Herstellung einer Sichtverpackung (100; 200) gemäß einem der Ansprüche 1 bis 10.

## Claims

1. Visibility packaging (100; 200) for energy storage elements (3), having the following features:
a. the visibility packaging (100; 200) is formed from at least one blank composed of a sheet material, with formation of a rear wall (1) and a front wall (2) of the visibility packaging,
b. the front wall (2) is spaced apart from the rear wall (1) to form a receiving space (6) for the energy storage elements (3),
c. the front wall (2) is provided with at least one viewing cutout (4),
d. the front wall (2) comprises at least one web (9), and
e. the web (9) has a central apex region (10) which is fixed to a contact region (40) of the rear wall (1), wherein the web (9) and the rear wall (1) together form a K-shaped cross section in a closure position and wherein the web (9) closes a removal opening of the receiving space (6),
**characterized in that**
f. the rear wall (1) has at least one perforation (30; 31; 32; 33) which delimits the contact region (40) from the rest of the rear wall (1) and which makes it possible to separate the contact region (40) from the rear wall (1), such that the web (9) can be transferred, by way of a folding operation, into a removal position in which the apex region (10) of the web (9) is spaced apart from the rear wall (1) and the web (9) frees the removal opening of the receiving space (6).

2. Visibility packaging according to Claim 1, having the following additional feature:
a. the sheet material is cardboard.

3. Visibility packaging according to Claim 1 or Claim 2, having the following additional feature:
a. the at least one web (9) is a border-side web, wherein two border-side webs (9) are preferably provided.

4. Visibility packaging according to one of the preceding claims, having the following additional feature:
a. the perforation (30; 31; 32; 33) is assigned at least one cutout (34; 35) which adjoins the perforation, in particular a semicircular cutout (34) or at least one border-side cutout (35).

5. Visibility packaging according to one of the preceding claims, having the following additional feature:
a. the visibility packaging (100) is formed from exactly one blank, in particular by folding along parallel lines and adhesive bonding.

6. Visibility packaging according to one of the preceding claims, having the following additional feature:
a. the visibility packaging (100; 200) is designed for packaging energy storage elements (3) in the form of cylindrical round cells.

7. Visibility packaging according to one of the preceding claims, having the following additional feature:
a. the visibility packaging (100; 200) is designed for the pair-wise arrangement of the energy storage elements (3), wherein a respective viewing cutout (4) is assigned to a pair of energy storage elements (3).

8. Visibility packaging according to one of the preceding claims, having the following additional feature:
a. the visibility packaging is designed for the arrangement of two or of four energy storage elements (3).

9. Visibility packaging according to one of the preceding claims, having the following additional feature:
a. the visibility packaging contains at least one energy storage element (3), preferably at least a pair of energy storage elements, particularly preferably one or two pairs of energy storage elements.

10. Blank composed of a sheet material for production of a visibility packaging (100; 200) according to one of Claims 1 to 10.

## Revendications

1. Emballage de visualisation (100 ; 200) pour des éléments de stockage d'énergie (3), présentant les caractéristiques suivantes :
a. l'emballage de visualisation (100 ; 200) est formé à partir d'au moins une pièce découpée dans un matériau en feuille avec formation d'une paroi arrière (1) et d'une paroi frontale (2) de l'emballage de visualisation,
b. la paroi frontale (2) est espacée de la paroi arrière (1) avec formation d'un puits de réception (6) pour les éléments de stockage d'énergie (3),
c. la paroi frontale (2) est pourvue d'au moins une découpe de visualisation (4),
d. la paroi frontale (2) comprend au moins une traverse (9), et
e. la traverse (9) présente une zone de sommet centrale (10) qui est fixée à une zone de contact (40) de la paroi arrière (1), la traverse (9) et la paroi arrière (1) formant ensemble une section transversale en forme de K dans une position de fermeture et la traverse (9) fermant une ouverture de prélèvement du puits de réception (6), **caractérisé en ce que**
f. la paroi arrière (1) présente au moins une perforation (30 ; 31 ; 32 ; 33) qui délimite la zone de contact (40) de la paroi arrière (1) restante et qui permet de séparer la zone de contact (40) de la paroi arrière (1), de telle sorte que la traverse (9) peut être transférée par une opération de rabattement dans une position de prélèvement dans laquelle la zone de sommet (10) de la traverse (9) est espacée de la paroi arrière (1) et la traverse (9) libère l'ouverture de prélèvement du puits de réception (6).

2. Emballage de visualisation selon la revendication 1, présentant la caractéristique supplémentaire suivante :
a. le matériau en feuille est du carton.

3. Emballage de visualisation selon la revendication 1 ou la revendication 2, présentant la caractéristique supplémentaire suivante :
a. l'au moins une traverse (9) est une traverse de bord, deux traverses de bord (9) étant de préférence prévues.

4. Emballage de visualisation selon l'une quelconque des revendications précédentes, présentant la caractéristique supplémentaire suivante :
a. la perforation (30 ; 31 ; 32 ; 33) est associée à au moins une découpe (34 ; 35) adjacente à la perforation, notamment une découpe en forme de demicercle (34) ou au moins une découpe de bord (35).

5. Emballage de visualisation selon l'une quelconque des revendications précédentes, présentant la caractéristique supplémentaire suivante :
a. l'emballage de visualisation (100) est formé à partir d'exactement une pièce découpée, notamment par pliage sur des lignes parallèles et collage.

6. Emballage de visualisation selon l'une quelconque des revendications précédentes, présentant la caractéristique supplémentaire suivante :
a. l'emballage de visualisation (100 ; 200) est configuré pour l'emballage d'éléments de stockage d'énergie (3) sous forme de cellules cylindriques rondes.

7. Emballage de visualisation selon l'une quelconque des revendications précédentes, présentant la caractéristique supplémentaire suivante :
a. l'emballage de visualisation (100 ; 200) est configuré pour l'agencement par paires des éléments de stockage d'énergie (3), une découpe de visualisation (4) étant associée à chaque paire d'éléments de stockage d'énergie (3).

8. Emballage de visualisation selon l'une quelconque des revendications précédentes, présentant la caractéristique supplémentaire suivante :
a. l'emballage de visualisation est configuré pour l'agencement de deux ou de quatre éléments de stockage d'énergie (3).

9. Emballage de visualisation selon l'une quelconque des revendications précédentes, présentant la caractéristique supplémentaire suivante :
a. l'emballage de visualisation contient au moins un élément de stockage d'énergie (3), de préférence au moins une paire d'éléments de stockage d'énergie, de manière particulièrement préférée une ou deux paire(s) d'éléments de stockage d'énergie.

10. Pièce découpée dans un matériau en feuille pour la fabrication d'un emballage de visualisation (100 ; 200) selon l'une quelconque des revendications 1 à 10.
